# EUROPEAN PATENT APPLICATION

(11) **EP 4 656 844 A2**
(43) Date of publication of application: **03.12.2025**
(21) Application number: 25179558.9
(22) Date of filing: 28.05.2025
(51) Int. Cl.: F01D 11/08, F01D 5/18, F01D 9/06

(54) **COMPONENTS FOR A GAS TURBINE ENGINE AND GAS TURBINE ENGINE**

(30) Priority: 29.05.2024 US 202418677543
(71) Applicant: RTX Corporation, Farmington, CT 06032 (US)
(72) Inventor: SHERMAN, Morely S., Farmington, 06032 (US); DRAKE, Jeremy T., Farmington, 06032 (US); MALDONADO, Billie R., Farmington, 06032 (US); PLANTE, James R., Farmington, 06032 (US)
(74) Representative: Dehns

(57) **Abstract**

A component (75) for a gas turbine engine (20), includes at least one internal cavity (82). The at least one internal cavity is defined by an outer wall (83) and an inner wall (79), extends through the component (75), and has at least one inlet opening (84) and at least one outlet opening (88), each being in fluid communication with the at least one internal cavity. The internal cavity has a first plurality of cooling features (90) extending from a surface (81) of the outer wall and a second plurality of cooling features (90) extending from a surface (77) of the inner wall. The first plurality of cooling features are in a facing spaced relationship with respect to the second plurality of cooling features.
In one aspect, each of the first plurality of cooling features has a serpentine shape extending in a first direction (92), and each of the second plurality of cooling features has a serpentine shape extending in the first direction.
In another aspect, each of the first plurality of cooling features has a chevron shape extending in a first direction, and each of the second plurality of cooling features has a chevron shape extending in a second direction, the first direction being opposite to the second direction.

## Description

### TECHNICAL FIELD

This disclosure relates to cooling features for a component of gas turbine engine and more particularly, a component of a gas turbine engine with the aforementioned cooling features.

### BACKGROUND

Gas turbine engines typically include a compressor section, a combustor section and a turbine section. During operation, air is pressurized in the compressor section and is mixed with fuel and burned in the combustor section to generate hot combustion gases. The hot combustion gases are communicated through the turbine section, which extracts energy from the hot combustion gases to power the compressor section and other gas turbine engine loads.

Both the compressor and turbine sections may include alternating series of rotating blades and stationary vanes that extend into the core flow path of the gas turbine engine. For example, in the turbine section, turbine blades rotate and extract energy from the hot combustion gases that are communicated along the core flow path of the gas turbine engine. The turbine vanes, which generally do not rotate, guide the airflow and prepare it for the next set of blades.

Blade outer air seals (BOAS), vanes, blades and other components are located in hot sections of the gas turbine engine. In some instances these components are cooled with cooling air that passes through an interior cavity of the component. Accordingly, it is desirable to provide a cooled hot section component with features that improves the cooling efficiency.

### BRIEF DESCRIPTION

Disclosed is a component for a gas turbine engine according to an aspect of the present invention, including: at least one internal cavity defined by an outer wall and an inner wall, the at least one internal cavity extending through the component, the at least one internal cavity having at least one inlet opening and at least one outlet opening each being in fluid communication with the at least one internal cavity; a first plurality of cooling features extending from a surface of the outer wall, each of the first plurality of cooling features having a serpentine shape extending in a first direction; and a second plurality of cooling features extending from a surface of the inner wall, each of the second plurality of cooling features having a serpentine shape extending in the first direction, and the first plurality of cooling features being in a facing spaced relationship with respect to the second plurality of cooling features.

In an embodiment of the above, the first plurality of cooling features and/or the second plurality of cooling features have a triangular configuration.

In an embodiment according to any of the previous embodiments, the first plurality of cooling features are axially offset from each other.

In an embodiment according to any of the previous embodiments, the first plurality of cooling features and the second plurality of cooling features define a serpentine channel.

In an embodiment according to any of the previous embodiments, the component is a blade outer air seal.

In an embodiment according to any of the previous embodiments, at least some of the second plurality of cooling features have a cooling hole extending from a surface of the at least some of the second plurality cooling features in the at least one internal cavity and through the inner wall.

In an embodiment according to any of the previous embodiments, the first plurality of cooling features are axially offset from each other.

In an embodiment according to any of the previous embodiments, the first plurality of cooling features and the second plurality of cooling features define a serpentine channel.

In an embodiment according to any of the previous embodiments, the component is a blade outer air seal.

In an embodiment according to any of the previous embodiments, at least some of the second plurality of cooling features have a cooling hole extending from a surface of the at least some of the second plurality cooling features in the at least one internal cavity and through the inner wall.

Also disclosed is a component for a gas turbine engine according to another aspect of the present invention, including: at least one internal cavity defined by an outer wall and an inner wall, the at least one internal cavity extending through the component, the at least one internal cavity having at least one inlet opening and at least one outlet opening each being in fluid communication with the at least one internal cavity; a first plurality of cooling features extending from a surface of the outer wall, each of the first plurality of cooling features having a chevron shape extending in a first direction; and a second plurality of cooling features extending from a surface of the inner wall, each of the second plurality of cooling features having a chevron shape extending in a second direction, the first direction being opposite to the second direction, and the first plurality of cooling features being in a facing spaced relationship with respect to the second plurality of cooling features.

In an embodiment of the above, the first plurality of cooling features and/or the second plurality of cooling features have a triangular configuration.

In an embodiment according to any of the previous embodiments, the first plurality of cooling features and the second plurality of cooling features overlap each other in a same phase.

In an embodiment according to any of the previous embodiments, the first plurality of cooling features and the second plurality of cooling features overlap each other in an offset phase.

In an embodiment according to any of the previous embodiments, at least some of the second plurality of cooling features have a cooling hole extending from a surface of the at least some of the second plurality of cooling features in the at least one internal cavity and through the inner wall.

In an embodiment according to any of the previous embodiments, the component is a blade outer air seal.

In an embodiment according to any of the previous embodiments, the first plurality of cooling features and the second plurality of cooling features overlap each other in an offset phase.

In an embodiment according to any of the previous embodiments, at least some of the second plurality of cooling features have a cooling hole extending from a surface of the at least some of the second plurality of cooling features in the at least one internal cavity and through the inner wall.

In an embodiment according to any of the previous embodiments, the component is a blade outer air seal.

Also disclosed is a gas turbine engine according to another aspect of the present invention, including; at least one component configured to receive a cooling air flow; at least one internal cavity defined by an outer wall and an inner wall, the at least one internal cavity extending through the component, the at least one internal cavity having at least one inlet opening and at least one outlet opening each being in fluid communication with the at least one internal cavity; a first plurality of cooling features extending from a surface of the outer wall, each of the first plurality of cooling features having a chevron shape or serpentine shape extending in a first direction; and a second plurality of cooling features extending from a surface of the inner wall, each of the second plurality of cooling features having a chevron shape or serpentine shape, and the first plurality of cooling features being in a facing spaced relationship with respect to the second plurality of cooling features.

### BRIEF DESCRIPTION OF THE DRAWINGS

The following descriptions should not be considered limiting in any way. With reference to the accompanying drawings, like elements are numbered alike:
FIG. 1 is a schematic, partial cross-sectional view of a gas turbine engine in accordance with this disclosure;
FIG. 2 is a schematic view of a two-stage high pressure turbine of the gas turbine engine;
FIG. 3 is a schematic view of a blade outer air seal for use in a gas turbine engine;
FIG. 4 is a cross-sectional view of an internal cavity of a blade outer air seal or component for use in a gas turbine engine in accordance with the present disclosure;
FIG. 5 is a schematic view of a blade outer air seal in accordance with the present disclosure;
FIG. 6 is a perspective view of the internal cavity illustrated in FIG. 4;
FIG. 7 is a cross-sectional view of a portion of the internal cavity illustrated in FIGS. 4 and 6;
FIG. 8 is a cross-sectional view of an internal cavity of a blade outer air seal or component for use in a gas turbine engine;
FIG. 9 is a perspective view of the internal cavity illustrated in FIG. 8; and
FIG. 10 is a cross-sectional view of a portion of the internal cavity illustrated in FIGS. 8 and 9.

### DETAILED DESCRIPTION

A detailed description of one or more embodiments of the disclosed apparatus and method are presented herein by way of exemplification and not limitation with reference to the FIGS.

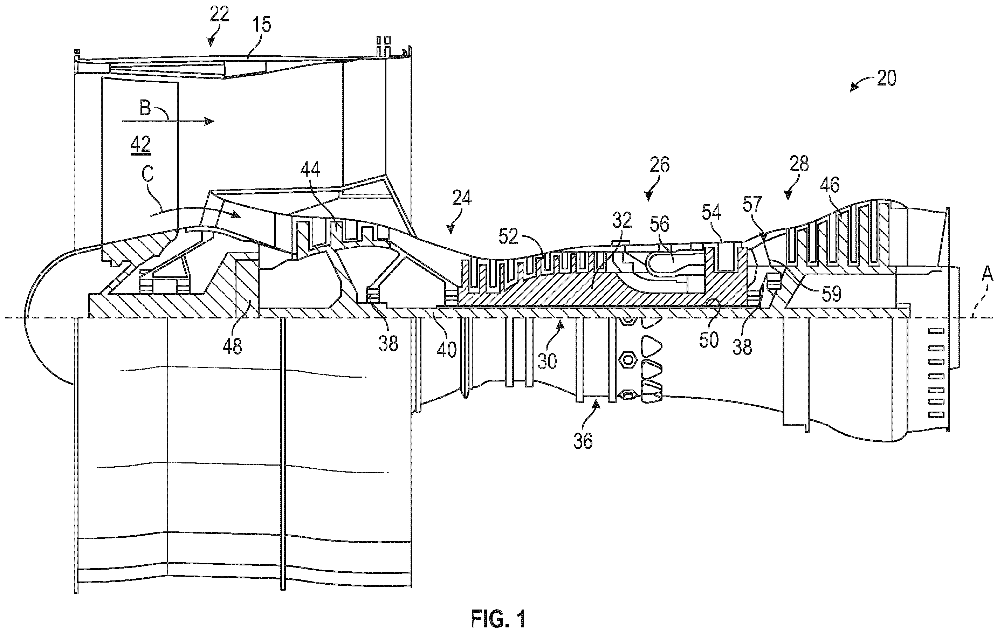

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include other systems or features. The fan section 22 drives air along a bypass flow path B in a bypass duct, while the compressor section 24 drives air along a core flow path C1 for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first or low pressure compressor 44 and a first or low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second or high pressure compressor 52 and a second or high pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In one embodiment, the geared architecture 48 is an epicyclic gear train, such as a planetary gear system or other gear system. It should be understood, however, that the above parameters are only exemplary of one embodiment of a geared architecture engine and that the present disclosure is applicable to other gas turbine engines including but not limited a non-geared architecture engine or direct drive turbofans.

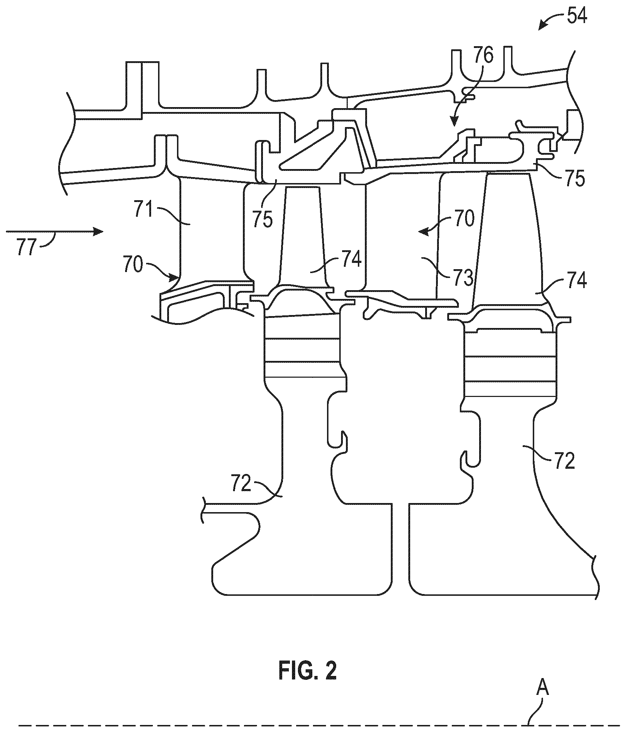

FIG. 2 illustrates a portion of the high pressure turbine (HPT) 54. FIG. 2 also illustrates a high pressure turbine stage vanes 70 one of which (e.g., a first stage vane 71) is located forward of a first one of a pair of turbine disks 72 each having a plurality of turbine blades 74 secured thereto. The turbine blades 74 rotate proximate to blade outer air seals (BOAS) 75 which are located aft of the first stage vane 71. The other vane 70 is located between the pair of turbine disks 72. This vane 70 may be referred to as the second stage vane 73. As used herein the first stage vane 71 is the first vane of the high pressure turbine section 54 that is located aft of the combustor section 26 and the second stage vane 73 is located aft of the first stage vane 71 and is located between the pair of turbine disks 72. In addition, blade outer air seals (BOAS) 75 are disposed between the first stage vane 71 and the second stage vane 73. The high pressure turbine stage vanes 70 (e.g., first stage vane 71 or second stage vane 73) are one of a plurality of vanes 70 that are positioned circumferentially about the axis A of the engine in order to provide a stator assembly 76. Hot gases from the combustor section 26 flow through the turbine in the direction of arrow 77. Although a two-stage high pressure turbine is illustrated other high pressure turbines are considered to be within the scope of various embodiments of the present disclosure.

The high pressure turbine (HPT) is subjected to gas temperatures well above the yield capability of its material. In order to mitigate such high temperature detrimental effects, a supply of cooling air is applied to an internal cavity of components located in the hot sections of the gas turbine engine. This cooling air may also be used for surface film-cooling by supplying the cooling air through cooling holes drilled on the components.

It should be noted that the terms "radial", "axial" and "circumferential" used throughout the description and the appended claims, are defined with respect to the central axis A of the engine 20. The terms "front", "forward" "afore", "aft" and after" used throughout the description and the appended claims are defined with respect to the flow direction of air being propelled through the engine 20.

As used herein forward or upstream and rearward or downstream refer are relative to the direction gases flowing through the cavity or channel 82 which depending on the orientation of the cavity of channel may be in the direction of the engine central longitudinal axis A of gas turbine engine 20. In addition, radially inward and radially outward also refer to the engine central longitudinal axis A.

As used herein, "integral" or "integrally formed" is intended to cover a single unitary structure. In other words, the single unitary structure is not capable of being disassembled without cutting or destruction of the single unitary structure.

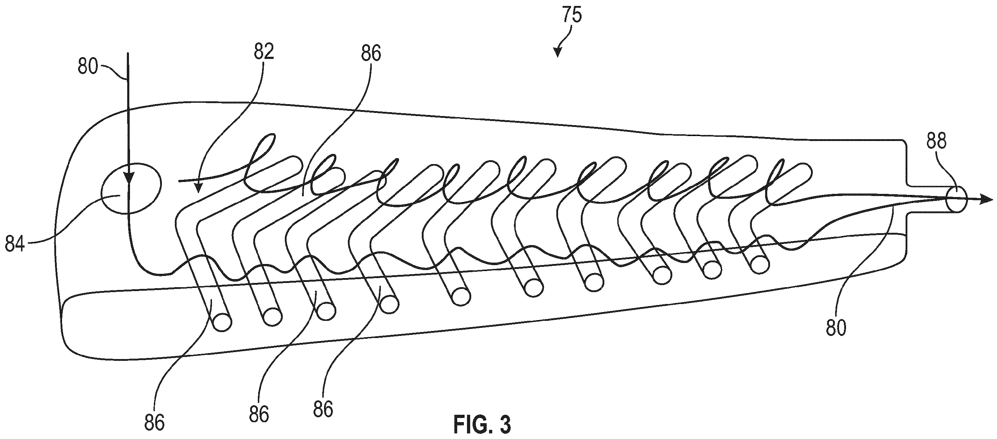

FIG. 3 schematically illustrates a blade outer air seal (BOAS) 75. Cooling air flow is illustrated by arrows 80 that is introduced into a cavity or channel 82 of the blade outer air seal 75 via at least one inlet opening 84. The cooling air flow is directed through the channels 82 that extend internally in the blade outer air seal 75. The channels 82 are provided with trip strips 86. These trip strips 86 can be generally referred to as protrusions or cooling features that extend from a surface of the channel. The trip strips create turbulences in the cooling air flow which enhances convection. The channel 82 is in fluid communication with the at least one inlet opening 84 and at least one outlet opening 88. The cooling air exiting the at least one outlet opening 88 may be used for surface film cooling. The at least one outlet opening 88 may be located away from the at least one inlet opening 84 such that maximum cooling efficiently can be achieved internally before the cooling air exits the channel 82 via the at least one outlet opening 88. However, prior manufacturing techniques have limited the size and detail in which the trip strips 86 can be produced.

In accordance with the present disclosure and by using tomographic layering technology, internal features of the components have be refined to manipulate the cooling airflow and improve heat transfer of the trip strips 86. For example, a three dimensional 3D digital model is transformed into a series of lithographic masks. Each mask representing a cross-sectional slice of a desired 3D solid. Each mask is then used to photochemically machine a replica from metal foil or polymeric film. Then the foil or films are stack-laminated to create a master mold. Then, production molds are then derived from the master mold. Then, the desired material is cast into or around the production mold to product the part.

In other words, lithographic etching and assembly are combined with computerized numerical control (CNC) machining to produce tools and/or cores with highly complex three-dimensional features. Afterwards a molding and casting process is then used with the cores to produce parts. See also U.S. Patent No. 8,598,553.

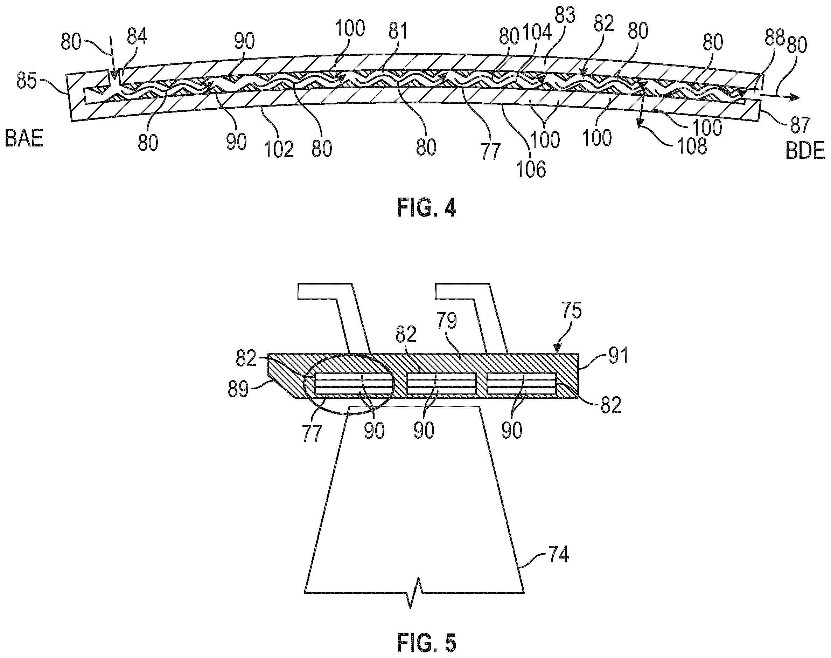

For example and referring now to at least FIGS. 4-10, cooling features 90 in accordance with various embodiments of the present disclosure are illustrated. As illustrated in at least FIG. 4, a portion of an interior cavity or channel 82 of a component or blade outer air seal (BOAS) 75 of the gas turbine engine 20 is illustrated. The component 75 may be any component that requires cooling including but not limited to any one of the following: blade outer air seals (BOAS), vanes, blades and other components that are required to be cooled by a source of cooling air. Moreover, the component 75 may have a plurality of interior cavities or channels 82 and the specific configurations of the component or blade outer air seal (BOAS) and the location of the cooling features 90 is not intended to be limited by the specific configurations illustrated in the attached FIGS. For example, the component 75 may have a plurality of interior cavities or channels 82 each with inlet and outlet openings 84, 88 and the plurality of interior cavities or channels 82 may be fluidly isolated from each other and/or in fluid communication with each other.

FIG. 4 schematically illustrates a cavity or channel 82 of a blade outer air seal (BOAS) or other component 75. Cooling air flow is illustrated by arrows 80 that is introduced into the cavity or channel 82 of the blade outer air seal or other component 75 via at least one inlet opening 84. The cooling air flow is directed through the channels 82 that extend internally in the blade outer air seal or other component 75. The channels 82 are provided with protrusions or cooling features 90 that extend from a radial inner surface 77 of an inner or lower wall 79 of the channel 82 and a radial upper surface 81 of an outer or upper wall 83 of the channel or cavity 82.

These protrusions or cooling features 90 create turbulences in the cooling air flow which enhances convection. The channel 82 is in fluid communication with the at least one inlet opening 84 and at least one outlet opening 88. The cooling air exiting the at least one outlet opening 88 may be used for surface film cooling. The at least one outlet opening 88 may be located away from the at least one inlet opening 84 such that maximum cooling efficiently can be achieved internally before the cooling air exits the channel 82 via the at least one outlet opening 88. It is, of course, understood that the locations of the at least one inlet opening 84 and the at least one outlet opening 88 may be in other locations than those specifically illustrated in the FIGS.

Referring now to at least FIGS. 4 and 5, the blade outer air seal or other component 75 may have a plurality of channels or cavities 82. The plurality of channels or cavities 82 may be fluidly isolated from each other or they may have fluid communication with each other.

As illustrated in at least FIGS. 4 and 5, the channels or cavities 82 and the cooling air flow extend circumferentially across the blade outer air seal or other component 75 from a blade arrival edge 85 to a blade departure edge 87. Alternatively, the channels or cavities 82 and the cooling air flow extend axially across the blade outer air seal or other component 75 from a leading edge 89 to a trailing edge 91. In yet another alternative, the channels or cavities 82 and the cooling air flow may be arranged to have a combination of channels or cavities 82 that extend circumferentially across the blade outer air seal or other component 75 from the blade arrival edge 85 to the blade departure edge 87 as well as axially across the blade outer air seal or other component 75 from the leading edge 89 to the trailing edge 91.

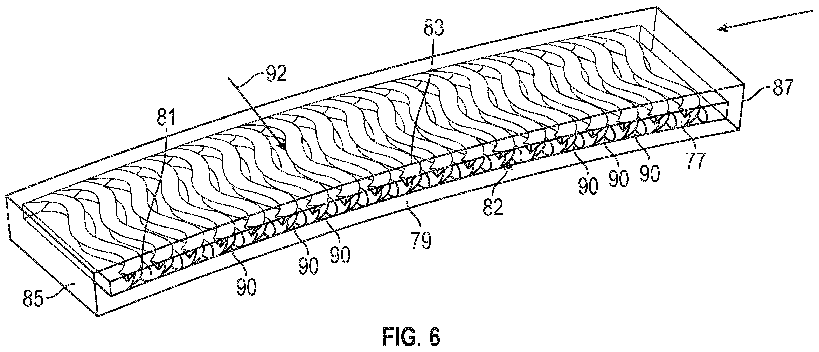

Referring now to at least FIGS. 4-7, a first plurality of cooling features 90 extend away or radially inward from the radial upper surface 81 of the outer or upper wall 83 of the channel 82 and a second plurality of cooling features 90 extend away or radially upward from the radial inner surface 77 of inner or lower wall 79 of the channel 82. In FIG. 6 and for convenience, the outer or upper wall 83 is illustrated in phantom.

As illustrated and in one embodiment, the first and second plurality of cooling features 90 are in a facing spaced relationship with respect to each other and have a serpentine shape or curved shape extending in a first direction 92. As illustrated, and in one embodiment, the first and second plurality of cooling features 90 have a triangular shape with a leading edge 94 and a trailing edge 96 with respect to the cooling air flow illustrated by arrow 80. In one embodiment, the first plurality of cooling features 90 and the second plurality of cooling features 90 are offset with respect to each other in either the axial or circumferential direction depending on the orientation of the channel or cavity 82. This offset will cause the tips 98 of the first plurality of cooling features 90 and the second plurality of cooling features 90 to be offset with respect to each other in either the axial or circumferential direction depending on the orientation of the channel or cavity 82. In other words, the offset will cause each one of the first plurality of cooling features 90 to be upstream with respect to at least one of the second plurality of cooling features 90. Alternatively, the offset will cause each one of the second plurality of cooling features 90 to be upstream with respect to at least one of the first plurality of cooling features 90. As used herein, upstream, refers to the direction of the cooling air flow illustrated by arrow 80.

This offset will create turbulent airflow in the channel or cavity 82 as it flows in the direction of arrow 80.

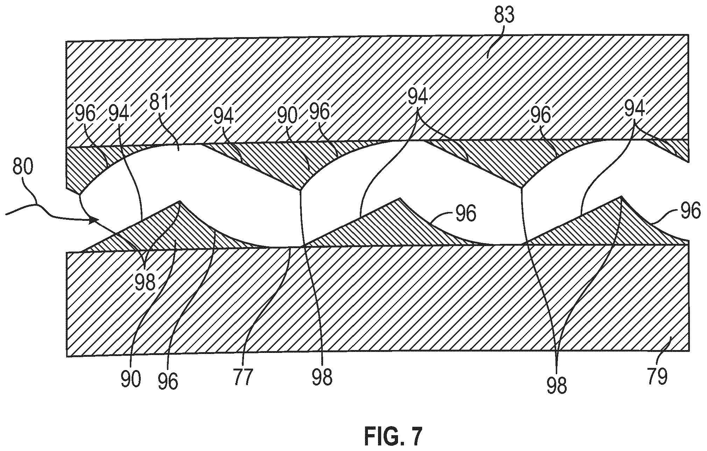

Still further and as illustrated in at least FIGS. 4 and 7, the offset of the first plurality of cooling features 90 with respect to the second plurality of cooling features 90 will cause them to define a serpentine channel or cavity 82 when viewed in the direction that extends from the inlet opening 84 to the outlet opening 88 and illustrated in the views of FIGS. 4 and 7.

In one alternative, at least some of the second plurality of cooling features 90 can have a cooling passage or cooling passages 100 that allows for cooling air flowing in the direction of arrow 80 to provide surface film cooling to an exterior surface 102 of the inner or lower wall 79 which may be referred to as gas path surface that is exposed to high temperatures. It is of course noted that the location and number of cooling passages 100 may vary from those illustrated in at least FIG. 4 and as previously noted various embodiments contemplate cooling features 90 where no cooling passages 100 are provided.

The cooling passage extends from an exterior surface of the cooling feature 90 to the exterior surface 102 of the component or blade outer air seal (BOAS) 75 in order to provide surface film cooling to the exterior surface 102. In one embodiment, the exterior surface 102 of the component 75 may be a gas path surface or component 75 is a hot section component of the engine 20 that requires surface film cooling. Passage 100 will have an inlet opening 104 located on the exterior surface of the cooling feature 90 and an outlet opening 106 located on the exterior surface 102. As such, and as illustrated by arrow 108, the cooling air 80 may enter the cooling feature 90 and exit on the exterior surface 102.

In one non-limiting embodiment, the inlet opening 104 is located on a top portion or tip 98 of the cooling feature 90. Of course, other locations are contemplated to be with the scope of the present disclosure. In yet another configuration, the features 90 located on the upper surface 81 may also be configured with a cooling passage 100 with a corresponding inlet opening and an outlet opening. The features 90 located on the upper surface 81 with a cooling passages 100 may be in combination with the features 90 located on the lower surface 77 with cooling passages 100 or alternatively only the features 90 located on the lower surface 77 have cooling passages 100 or alternatively only the features 90 located on the upper surface have cooling passages 100. As mentioned above, it is also contemplated that none of the features 90 have cooling passages 100.

Referring now to FIGS. 5 and 8-10, an alternative configuration of the present disclosure is illustrated. As mentioned above, the channels or cavities 82 and the cooling air flow extend circumferentially across the blade outer air seal or other component 75 from a blade arrival edge 85 to a blade departure edge 87. Alternatively, the channels or cavities 82 and the cooling air flow extend axially across the blade outer air seal or other component 75 from a leading edge 89 to a trailing edge 91. In yet another alternative, the channels or cavities 82 and the cooling air flow may be arranged to have a combination of channels or cavities 82 that extend circumferentially across the blade outer air seal or other component 75 from the blade arrival edge 85 to the blade departure edge 87 as well as axially across the blade outer air seal or other component 75 from the leading edge 89 to the trailing edge 91.

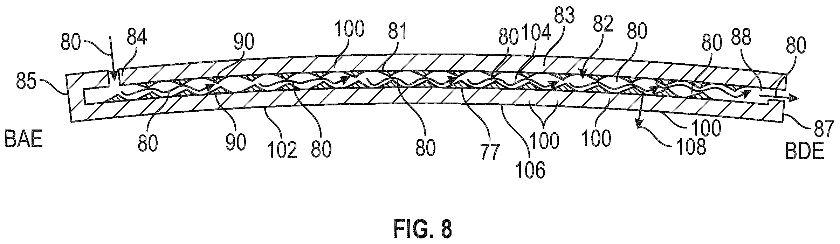

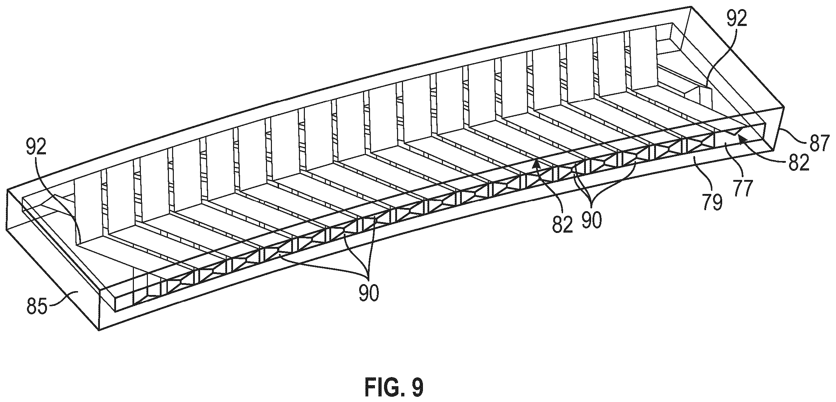

As illustrated in FIGS. 8-10, a first plurality of cooling features 90 extend away or radially inward from the radial upper surface 81 of the outer or upper wall 83 of the channel 82 and a second plurality of cooling features 90 extend away or radially upward from the radial inner surface 77 of inner or lower wall 79 of the channel 82. In FIG. 9 and for convenience, the outer or upper wall 83 is illustrated in phantom.

As illustrated and in one embodiment, the first and second plurality of cooling features 90 are in a facing spaced relationship with respect to each other and have a chevron shape. As illustrated, and in one embodiment, the first and second plurality of cooling features 90 have a triangular shape with a leading edge 94 and a trailing edge 96 with respect to the cooling air flow illustrated by arrow 80. In one embodiment, the first plurality of cooling features 90 located on the upper surface 81 are forward facing with respect to the cooling air flow 80 direction and the second plurality of cooling features 90 located on the lower surface 77 are rearward facing with respect to the cooling air flow 80 direction. In other words, an apex 92 of the first plurality of cooling features 90 located on the upper surface 81 is forward facing with respect to the cooling air flow 80 direction and the apex 92 of the second plurality of cooling features 90 located on the lower surface 77 is rearward facing with respect to the cooling air flow 80 direction. As such, and in one embodiment, the first plurality of cooling features 90 located on the upper surface 81 are 180 degrees offset with respect to the second plurality of cooling features 90 located on the lower surface 77. In an alternative embodiment, the second plurality of cooling features 90 located on the lower surface 77 are forward facing with respect to the cooling air flow 80 direction and the first plurality of cooling features 90 located on the upper surface 81 is rearward facing with respect to the cooling air flow 80 direction.

For example, the chevrons of the first plurality of cooling features 90 located on the upper surface 81 are offset by 180 degrees between the second plurality of cooling features 90 located on the lower surface 77. As such, the first plurality of cooling features 90 located on the upper surface 81 and the second plurality of cooling features 90 located on the lower surface 77 such that the first plurality of cooling features 90 and the second plurality of cooling features 90 create a serpentine channel (in cross section).

As such, the first plurality of cooling features 90 located on the upper surface 81 and the second plurality of cooling features located on the lower surface 77 are offset with respect to each other in either the axial or circumferential direction depending on the orientation of the channel or cavity 82. This offset will cause the tips 98 of the first plurality of cooling features 90 and the second plurality of cooling features 90 to be offset with respect to each other in either the axial or circumferential direction depending on the orientation of the channel or cavity 82. In other words, the offset will cause each one of the first plurality of cooling features 90 to overhang or to have its apex 92 upstream with respect to at least one of the second plurality of cooling features 90. Alternatively, the offset will cause each one of the second plurality of cooling features 90 to be upstream with respect to at least one of the first plurality of cooling features 90. As used herein, upstream, refers to the direction of the cooling air flow illustrated by arrow 80.

This offset will create turbulent airflow in the channel or cavity 82 as it flows in the direction of arrow 80.

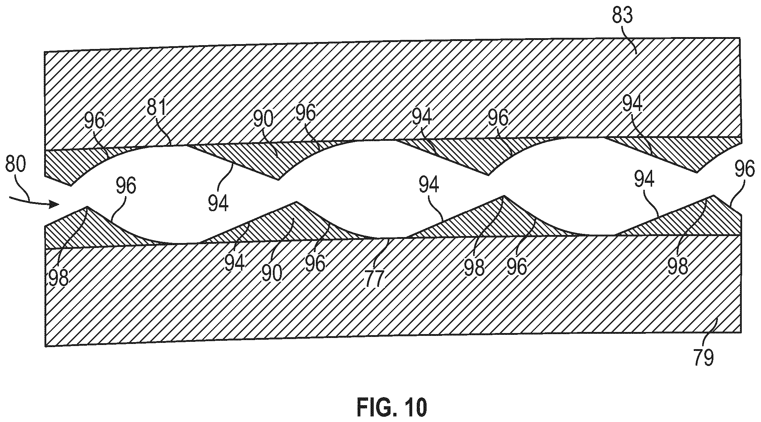

Still further and as illustrated in at least FIGS. 8 and 10, the offset of the first plurality of cooling features 90 with respect to the second plurality of cooling features 90 will cause them to define a serpentine channel or cavity 82 when viewed in the direction that extends from the inlet opening 84 to the outlet opening 88 and illustrated in the views of FIGS. 8 and 10.

In one alternative, at least some of the second plurality of cooling features 90 can have a cooling passage or cooling passages 100 that allows for cooling air flowing in the direction of arrow 80 to provide surface film cooling to an exterior surface 102 of the inner or lower wall 79 which may be referred to as gas path surface that is exposed to high temperatures. It is of course noted that the location and number of cooling passages 100 may vary from those illustrated in at least FIG. 4 and as previously noted various embodiments contemplate cooling features 90 where no cooling passages 100 are provided.

The cooling passage extends from an exterior surface of the cooling feature 90 to the exterior surface 102 of the component or blade outer air seal (BOAS) 75 in order to provide surface film cooling to the exterior surface 102. In one embodiment, the exterior surface 102 of the component 75 may be a gas path surface or component 75 is a hot section component of the engine 20 that requires surface film cooling. Passage 100 will have an inlet opening 104 located on the exterior surface of the cooling feature 90 and an outlet opening 106 located on the exterior surface 102. As such, and as illustrated by arrow 108, the cooling air 80 may enter the cooling feature 90 and exit on the exterior surface 102.

In one non-limiting embodiment, the inlet opening 104 is located on a top portion or tip 98 of the cooling feature 90. Of course, other locations are contemplated to be with the scope of the present disclosure. In yet another configuration, the features 90 located on the upper surface 81 may also be configured with a cooling passage 100 with a corresponding inlet opening and an outlet opening. The features 90 located on the upper surface 81 with a cooling passages 100 may be in combination with the features 90 located on the lower surface 77 with cooling passages 100 or alternatively only the features 90 located on the lower surface 77 have cooling passages 100 or alternatively only the features 90 located on the upper surface have cooling passages 100. As mentioned above, it is also contemplated that none of the features 90 have cooling passages 100.

In accordance with various embodiments of the present disclosure, opposing features 90 on the inner diameter (ID) 77 and outer diameter (OD) 81, overlap each other in the same phase or offset phase, in linear or chevron rows. The features can be triangular trip strips on the inner diameter (ID) 77 and outer diameter (OD) 81 of an internal channel 82. As mentioned above and in one embodiment, one set of strips or features 90 on one surface will overhang ("waves") the strips or features 90 on the opposite surface.

As previously mentioned and in any of the aforementioned embodiments, the component 75 may be any component that requires cooling including but not limited to any one of the following: blade outer air seals (BOAS), vanes, blades and other components that are required to be cooled by a source of cooling air.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A component (75) for a gas turbine engine (20), comprising:
at least one internal cavity (82) defined by an outer wall (83) and an inner wall (79), the at least one internal cavity (82) extending through the component (75), the at least one internal cavity (82) having at least one inlet opening (84) and at least one outlet opening (88) each being in fluid communication with the at least one internal cavity (82);
a first plurality of cooling features (90) extending from a surface (81) of the outer wall (83), each of the first plurality of cooling features (90) having a serpentine shape extending in a first direction (92); and
a second plurality of cooling features (90) extending from a surface (77) of the inner wall (79), each of the second plurality of cooling features (90) having a serpentine shape extending in the first direction (92), and the first plurality of cooling features (90) being in a facing spaced relationship with respect to the second plurality of cooling features (90).

2. The component (75) of claim 1, wherein the first plurality of cooling features (90) have a triangular configuration.

3. The component (75) of claim 1 or 2, wherein the second plurality of cooling features (90) have a triangular configuration.

4. The component (75) of claim 1, 2 or 3, wherein the first plurality of cooling features (90) are axially offset from each other.

5. The component (75) of any preceding claim, wherein the first plurality of cooling features (90) and the second plurality of cooling features (90) define a serpentine channel (82).

6. The component (75) of any preceding claim, wherein the component (75) is a blade outer air seal.

7. The component (75) of any preceding claim, wherein at least some of the second plurality of cooling features (90) have a cooling hole extending from a surface of the at least some of the second plurality cooling features (90) in the at least one internal cavity (82) and through the inner wall (79).

8. A component (75) for a gas turbine engine (20), comprising:
at least one internal cavity (82) defined by an outer wall (83) and an inner wall (79), the at least one internal cavity (82) extending through the component (75), the at least one internal cavity (82) having at least one inlet opening (84) and at least one outlet opening (88) each being in fluid communication with the at least one internal cavity (82);
a first plurality of cooling features (90) extending from a surface (81) of the outer wall (83), each of the first plurality of cooling features (90) having a chevron shape extending in a first direction (92); and
a second plurality of cooling features (90) extending from a surface (77) of the inner wall (79), each of the second plurality of cooling features (90) having a chevron shape extending in a second direction, the first direction (92) being opposite to the second direction, and the first plurality of cooling features (90) being in a facing spaced relationship with respect to the second plurality of cooling features (90).

9. The component (75) of claim 8, wherein the first plurality of cooling features (90) have a triangular configuration.

10. The component (75) of claim 8 or 9, wherein the second plurality of cooling features (90) have a triangular configuration.

11. The component (75) of claim 8, 9 or 10, wherein the first plurality of cooling features (90) and the second plurality of cooling features (90) overlap each other in a same phase.

12. The component (75) of claim 8, 9 or 10, wherein the first plurality of cooling features (90) and the second plurality of cooling features (90) overlap each other in an offset phase.

13. The component (75) of any of claims 8 to 12, wherein at least some of the second plurality of cooling features (90) have a cooling hole extending from a surface of the at least some of the second plurality of cooling features (90) in the at least one internal cavity (82) and through the inner wall (79).

14. The component (75) of any of claims 8 to 13, wherein the component (75) is a blade outer air seal.

15. A gas turbine engine (20) comprising at least one component (75) according to any preceding claim configured to receive a cooling air flow (80).
